# EUROPÄISCHE PATENTANMELDUNG

(11) **EP 0 806 612 A2**
(43) Veröffentlichungstag der Anmeldung: **12.11.1997**
(21) Anmeldenummer: 97250150.6
(22) Anmeldetag: 06.05.1997
(51) Int. Cl.: F24D 3/00, F24H 9/14, F24D 19/10

(54) **Kompaktheizzentrale**

(30) Priorität: 07.05.1996 DE 29609069 U
(71) Anmelder: Compex Bauberatungs- und Ausführungsgesellschaft mbH, 12555 Berlin (DE)
(72) Erfinder: Schmidt, Günther, 12309 Berlin (DE)
(74) Vertreter: Kietzmann, Manfred

(57) **Zusammenfassung**

Die Erfindung betrifft eine kompakte Heizzentrale für die Raumheizung und Brauchwassererwärmung, insbesondere von Ein- bis Vierfamilienhäusern.

Bei der Erfindung sind eine Kesseltherme (1), ein Brauchwasserspeicher (2), das innere Leitungsnetz, die Mittel zum Führen der Zu- und Abluft, die Mess-, Steuer- und Regeleinrichtungen zusammen mit den Sicherheitseinrichtungen einer Solar-, Trinkwasser-, Gas-bzw. Heizungsanlage innerhalb einer Verkleidung angeordnet.

Die Kesseltherme (1) befindet sich dabei innerhalb eines mittels einer Pumpe (4) betriebenen Heizkreislaufs für hohes Temperaturniveau (5). Dieser Heizkreislauf ist im Vorlauf über einen Mischpunkt (6 ) mit dem Rücklauf eines mittels einer Pumpe (7) betriebenen Heizkreislaufs für niedriges Temperaturniveau (8) stufenlos regelbar gekoppelt. Vom Mischpunkt (6) besteht ein gemeinsamer Zulauf zu einem Verteilventil (11), das je nach Anforderung den vorgemischten Volumenstrom mehr oder weniger über den Wärmeaustauscher (9) im Brauchwasserspeicher (2) leitet und dabei Wärme in den Speicher abgibt oder von ihm aufnimmt. Dieser Speicher enthält gleichzeitig den Wärmetauscher (10) für die zugeleitete Solarenergie. Nach dem Wärmetauscher wird der Volumenstrom an einem Verteilpunkt (15) in den Vorlauf des Heizkreises für niedriges Temperaturniveau (8) und in den Rücklauf des Heizkreislaufs für hohes Temperaturniveau (5) geleitet (Fig. 1).

## Beschreibung

Die Erfindung betrifft eine Kompaktheizzentrale für die Raumheizung und die Brauchwassererwärmung.

Derartige Heizzentralen sind bekannt und bestehen grundsätzlich aus Brenner, Kessel und Regelsystem, die möglichst kompakt angeordnet sind.

Bereits in der DE-OS 26 38 354 wurde eine Zentralheizungsanlage vorgestellt, bei der Brenner, Heizkessel, Temperatur- und Wasserstandsregler, Ausdehnungsgefäß und Meßgeräte auf einem starren Grundrahmen montiert sind.

Gemäß dem neueren DE-Gbm 91 15 909 ist vorgesehen, einen Brauchwasserspeicher und ein Ausdehnungsgefäß zu einer an der Geräterückseite angeordneten Baueinheit zusammenzufassen und auf dieser Baueinheit die Gas- und Wasserarmaturen, Pumpen, Ventile, Brenner, Brennkammern, Wärmeübertrager und die Steuerelektronik zu montieren. Gleichzeitig ist diese Baueinheit das tragende Element zur Befestigung an der Wand.

Diese Erfindung wird durch die DE-OS 44 00 371 verbessert, indem vorgeschlagen wird, die Heizungsanlage in selbständigen Baueinheiten auszuführen (Anschluß-, Regel und Erwärmungseinheit), die untereinander vorwiegend mittels Steckelementen verbindbar sind. Da diese Baueinheiten für unterschiedliche Leistungsgrößen existieren, lassen sich verschiedene Heizgeräte zusammenstellen, können bereits montierte Heizgeräte durch Baueinheitenaustausch umgerüstet werden, ohne daß sich der Grundflächenbedarf verändert.

Mit der im DE-Gbm 295 12 135 beschriebenen Erfindung wird von den kompakten, sich selbst tragenden Heizungsanlagen weggegangen. Hier wird vorgeschlagen, neben dem Gasgerät auch alle Hilfs- und Nebenaggregate, wie ein Ausdehnungsgefäß, Pumpen, Ventile, Verteiler, Rohrgruppen für Fußbodenheizungen oder einen Speicher in einem von einer Vorwand abgedeckten Raum zwischen Vorwand und Hausmauer anzuordnen.

Diese neuen technischen Lösungen weisen sicher für den spezifischen Anwendungsfall Vorteile auf, entsprechen aber nicht dem Bedarf nach einer kompakten Heizungszentrale, die auch zusätzlich alternative Energiequellen nutzt und dabei noch Heizkreisläufe mit unterschiedlichem Temperaturniveau platzsparend koppelt.

Aufgabe der Erfindung ist es, eine kompakte Heizzentrale für die Raumheizung und Brauchwassererwärmung von Ein- bis Vierfamilienhäuser komplett und funktionssicher mit Kesseltherme, Brauchwasserspeicher, Ausdehnungsgefäßen, innerem Leitungsnetz, Mitteln zum Führen der Zu- und Abluft, Meß-, Steuer- und Regeleinrichtungen sowie sicherheitstechnischen Einrichtungen für die Trinkwasser-, Solar- und Gastechnik entsprechend den anerkannten Regeln der Technik zu schaffen, die nicht nur kompakt aufgebaut ist, sondern zusätzlich durch direkte Integration eines Solarkreises eine ökonomisch (höherer Grad der Vorfertigung / geringer Platzbedarf) und ökologisch (optimierter Arbeitspunkt der Anlagenteile) günstige Heizzentrale darstellt.

Diese Aufgabe wird mit den kennzeichnenden Merkmalen des Anspruchs 1 gelöst, vorteilhafte Ausgestaltungen sind Gegenstand der Unteransprüche.

Erfindungsgemäß werden eine Kesseltherme, ein Brauchwasserspeicher, das innere Leitungsnetz, die Mittel zum Führen der Zu- und Abluft, die Meß- , Steuer- und Regeleinrichtungen zusammen mit den Sicherheitseinrichtungen der Solar-, Trinkwasser-, Gas-, bzw. Heizungsanlage innerhalb einer Verkleidung angeordnet.

Die Kesseltherme befindet sich dabei innerhalb eines mittels einer Pumpe betriebenen Heizkreislaufs für hohes Temperaturniveau (tv/tr; 70/50°C). Dieser Heizkreislauf ist im Vorlauf über einen Mischpunkt mit dem Rücklauf eines mittels einer Pumpe betriebenen Heizkreislaufs für niedriges Temperaturniveau (tv/tr; 47/37°C) stufenlos regelbar gekoppelt. Vom Mischpunkt besteht ein gemeinsamer Zulauf zu einem Verteilventil, das je nach Anforderung den vorgemischten Volumenstrom mehr oder weniger über den Wärmetauscher im Brauchwasserspeicher leitet und dabei Wärme in den Speicher abgibt oder von ihm aufnimmt. Dieser Speicher enthält gleichzeitig den Wärmetauscher für die zugeleitete Solarenergie.
Nach dem Wärmetauscher wird der Volumenstrom an einem Verteilpunkt in den Vorlauf des Heizkreises für niedriges Temperaturniveau und in den Rücklauf des Heizkreislaufs für hohes Temperaturniveau geleitet.

Diese Anordnung gewährleistet ein optimales Zusammenführen von Heizkreisen unterschiedlicher Temperaturniveaus für die Heizung und Warmwasserbereitung mit dem Vorrang einer maximalen Solarenergienutzung aber auch der Funktionsstabilität bei geringem Anfall von Solarenergie über den gesamten Jahresbereich.

Optimale Funktionalität einer solchen hydraulischen Schaltung ermöglicht ein Meß-, Steuer-, und Reglungssystem, das in der Lage ist, sich auf die Zustände im und außerhalb des Systems einzustellen, um dann folgerichtig die entsprechenden Steuerimpulse an die Stellglieder (Pumpen, Verteilventil, Motorventil) zu geben. Dieses dynamische, offene Reglungssystem betreibt ein Gebäudeenergiemanagement derart, daß Energieangebot und Energienachfrage fortlaufend erfaßt und aufeinander abgestimmt werden. Das bedeutet, der Wärmeerzeuger (Kesseltherme) wird in seiner Funktion nicht mehr wie herkömmlich statisch (Führungsgröße Außentemperatur/ Führungsraum), sondern dynamisch (Führungsgröße ist neben der Außentemperatur der tatsächliche Wärmebedarf in den einzelnen Räumen) in das Heizsystem eingebunden. Dazu stellt ein Datenbussystem die notwendige Kommunikation zwischen den Meß-, Steuer-, und Regeleinrichtungen her.

Eine entscheidende Rolle für den optimalen Betrieb kommt dem Zusammenspiel der Pumpen der Heizkreisläufe zu. In einer vorteilhaften Ausführungsform sind die Pumpe des Heizkreislaufs für hohes Temperaturniveau zwischen der Kesseltherme und dem Mischpunkt und die Pumpe des Heizkreislaufs für niedriges Temperaturniveau in dessen Rücklauf angeordnet. Diese Pumpen sind jeweils drehzahlregulierbar im Bereich 0-100 % und werden bezüglich ihrer Drehzahlen in einem umgekehrt proportionalen Verhältnis gesteuert, wobei das Eingangssignal für die Steuerung der Drehzahlen der Pumpen der notwendige Wärmebedarf für die Raumheizung oder Warmwasserbereitung ist (Realisierung durch Softwareprogramm).

Durch die jeweiligen Volumenströme der Pumpen wird über den Mischpunkt die benötigte Vorlauftemperatur gesteuert. Dabei kommt dem Verteilventil eine besondere Bedeutung derart zu, daß damit der Speicher je nach Erfordernissen bzw. Ladezustand be- oder entladen werden kann (Raumheizung/Warmwasserbedarf).

Wird nun die Drehzahl der Pumpe im Heizkreislauf für hohes Temperaturniveau erhöht und damit die Fördermenge und der Druck in diesem Kreislauf, so fließt mehr Heizmedium aus dem Heizkreislauf für hohes Temperaturniveau in den Mischpunkt. Durch die umgekehrt proportionale Drehzahlsteuerung der Pumpen wird das Mischungsverhältnis der Volumenströme aus den zwei unterschiedlich temperierten Kreisläufen so verändert, daß sich eine entsprechende Vorlauftemperatur im System einstellt.

Um eine hohe Kompaktheit der Heizzentrale zu erreichen, d.h. maximales Speichervolumen bei gleichzeitig minimalem Platzbedarf, werden das innere Leitungsnetz, die Meß-, Steuer- und Regeleinrichtungen, die Pumpen der Heizkreisläufe und die Pumpe der Solarkollektoranlage, die Anschlußleitungen und der Mischpunkt vor der Therme bzw. dem Brauchwasserspeicher angeordnet. Dieser Teil bleibt in der Verkleidung über eine verschließbare Öffnung leicht zugängig.

Die Anordung des Ausdehnungsgefäßes für die Heizkreisläufe und des Sicherheitsgefäßes für die Solarkollektoranlage erfolgt erfindungsgemäß bevorzugt unterhalb des Brauchwasserspeiches in der Verkleidung.

Ein Ausführungsbeispiel der Erfindung wird nachstehend an Hand der Zeichnung näher erläutert. Es zeigen:
- Fig. 1: einen Schaltplan der Kompaktheizzentrale
- Fig. 2: die Anordnung des inneren Leitungsnetzes etc. vor der Kesseltherme bzw. dem Brauchwasserspeicher

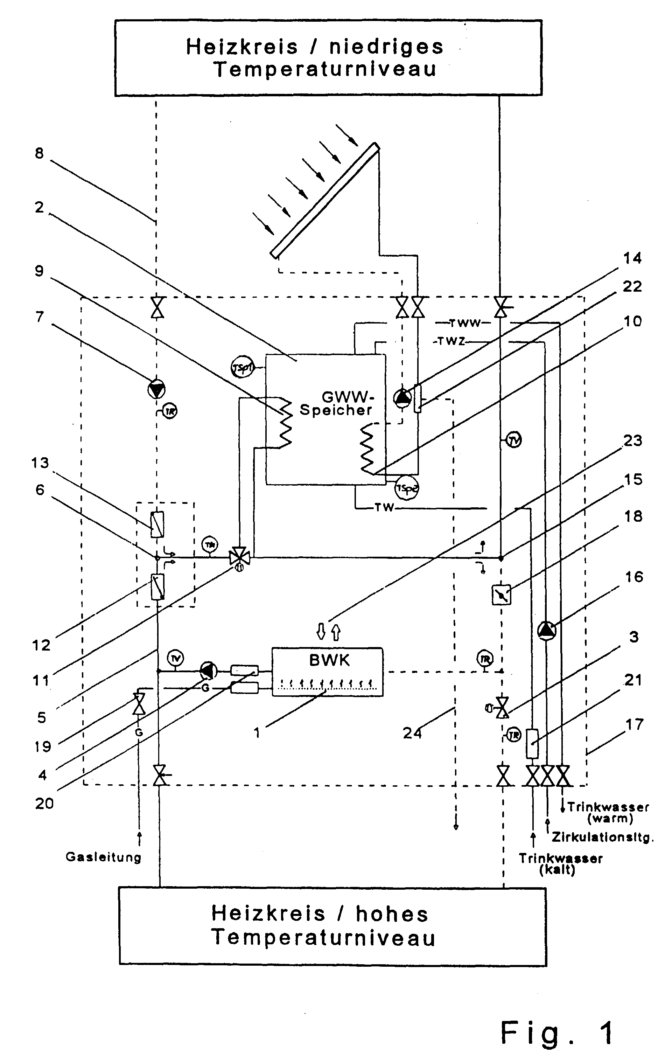

Fig. 1 zeigt in einem Schaltplan der Kompaktheizzentrale den Heizkreislauf für hohes Temperaturniveau 5 mit der Therme 1 und der Pumpe 4 sowie den Heizkreislauf für niedriges Temperaturniveau 8 mit der Pumpe 7. Die beiden Heizkreisläufe sind miteinander gekoppelt, einmal über einen Mischpunkt 6 und zum anderen über den Verteilpunkt 15. Der Mischpunkt 6 ist dabei zwischen dem Vorlauf des Heizkreislaufs für hohes Temperaturniveau 5 und dem Rücklauf des Heizkreislaufs für niedriges Temperaturniveau 8 angeordnet. Vom Mischpunkt 6 besteht ein gemeinsame Verbindung zum Verteilventil 11. Je nach Stellung des Ventils 11 wird der Brauchwasserspeicher 2 in das System eingebunden und der Medienstrom gelangt von dort zum Verteilpunkt 15, wo er über eine Drosseleinrichtung 18 in den Rücklauf des Heizkreislaufs für hohes Temperaturniveau 5 und in den Vorlauf des Heizkreislaufs für niedriges Temperaturniveau 8 geleitet wird.

Weiterhin ist die Solarkollektoranlage angedeutet, die mittels der Pumpe 14 betrieben wird und deren Wärmetauscher 10 ebenfalls im Brauchwasserspeicher 2 angeordnet ist. Der Mischpunkt 6 weist eingangsseitig zwei Rückschlagklappen 12, 13 auf, von denen die Rückschlagklappe 12 mit dem Heizkreislauf für hohes Temperaturniveau 5 und das Rückschlagklappe 13 mit dem Heizkreislauf für niedriges Temperaturniveau 8 verbunden ist.

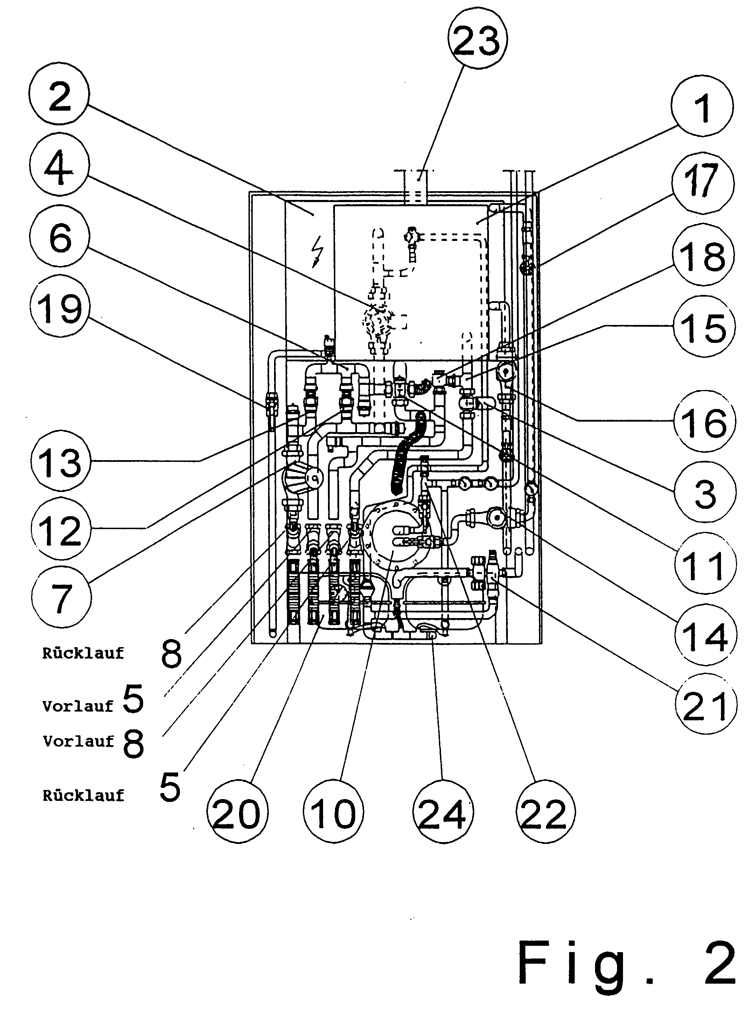

In Fig. 2 ist die Kompaktheizzentrale in der Vorderansicht ohne Verkleidung 17 und Wärmedämmung dargestellt. Deutlich erkennbar ist die Anordnung des inneren Leitungsnetzes, u.a. mit dem Verteilpunkt 15 und dem Mischpunkt 6, der Meß,- Steuer- und Regeleinrichtungen mit den Rückschlagklappen 12 und 13, dem Motorregulierventil 3, dem Verteilventil 11, der Drosseleinrichtung 18, den Pumpen 4 und 7 der Heizkreisläufe und der Pumpe 14 der Solarkollektoranlage, der Zirkulationspumpe 16, der Sicherheitsarmaturengruppen für das Trinkwasser-Gastechnik- und Heizungssystem 21 und 22, sowie der Anschlußleitungen zu den Heizkreisläufen 5 und 8 vor der Therme 1 bzw. dem Brauchwasserspeicher 2.

Das Ausdehnungsgefäß 20 für die Heizkreisläufe und das Sicherheitsgefäß für die Solarkollektoranlage befinden sich unterhalb des Brauchwasserspeichers 2 innerhalb der Verkleidung.

Ein besonders vorteilhafter Einsatz der erfindungsgemäßen Kompaktheizzentrale betrifft die Versorgung von 85 - 360 m² Wohnfläche bei Verwendung einer modulierenden Kesseltherme 1 mit einer Brennerleistung von 6 - 29 kW, einem Brauchwasserspeicherinhalt von 520 1 und einer Sonnenkollektorfläche von ca. 3,4 m².

Darüberhinaus zeichnet sich die beschriebene Kompaktheizzentrale neben den funktionalen Vorteilen besonders durch ihren hohen Grad an Vorfertigung, der geringen Vorortmontage und den geringen Platzbedarf aus, was ihren Einsatz in neuerrichteten Häusern mit Niedrigenergiestandard und schnellen Montagezeiten vorteilhaft macht.

### Liste der Bezugszeichen

- 1: Kesseltherme
- 2: Brauchwasserspeicher
- 3: Motorregelventil
- 4: Pumpe / hohes Temperaturniveau
- 5: Heizkreislauf für höheres Temperaturniveau
- 6: Mischpunkt
- 7: Pumpe / niedriges Temperaturniveau
- 8: Heizkreislauf für niedriges Temperaturniveau
- 9: Wärmetauscher / Heizkreis
- 10: Wärmetauscher / Solarkreis
- 11: Verteilventil
- 12: Rückschlagklappe / Heizkreis hohes Temperaturniveau
- 13: Rückschlagklappe / Heizkreis niedriges Temperaturniveau
- 14: Pumpe / Solarkreis
- 15: Verteilpunkt
- 16: Zirkulationspumpe Warmwasser
- 17: Verkleidung
- 18: Drosseleinrichtung
- 19: Gasanschluß
- 20: Ausdehnungsgefäß Heizung
- 21: Sicherheizseirichtung Trinkwasser
- 22: Sicherheitseinrichtung Solarkreis
- 23: Verbrennungsluft-/Abgasführung
- 24: Tropfwasserleitung

## Patentansprüche

1. Kompaktheizzentrale für die Raumheizung und Brauchwassererwärmung mit Kesseltherme und Brauchwasserspeicher, innerem Leitungsnetz, Mitteln zum Führen der Zu- und Abluft und Meß,- Steuer,- und Regeleinrichtungen,
dadurch gekennzeichnet, daß
die Kesseltherme (1), der Brauchwasserspeicher (2), das innere Leitungsnetz, die Mittel zum Führen der Zu- und Abluft und die Meß,- Steuer,- und Regeleinrichtungen mit der Sicherheitseinrichtung (22) für eine Sonnenkollektoranlage und deren Wärmetauscher (10) innerhalb einer Verkleidung (17) angeordnet sind, die Kesseltherme (1) sich innerhalb eines mittels der Pumpe (4) betriebenen Heizkreislaufs für hohes Temperaturniveau (5) befindet, dieser Heizkreislauf im Vorlauf über einen Mischpunkt (6) mit dem Rücklauf des durch Pumpe (7) betriebenen Heizkreislaufs für niedriges Temperaturniveau (8) gekoppelt ist, vom Mischpunkt (6) ein gemeinsamer Zulauf zum Verteilventil (11) besteht und der Brauchwasserspeicher (2) über die Stellung des Verteilventils (11) in das System eingebunden ist, nach dem Wärmetauscher (9) eine Verteilpunkt (15) zum Vorlauf des Heizkreislaufs für niedriges Temperaturniveau (8) und zum Rücklauf des Heizkreislaufs für hohes Temperaturniveau (5) angeordnet ist und der Brauchwasserspeicher (2) gleichzeitig den Wärmetauscher (10) für die zugeleitete Solarenergie enthält.

2. Kompaktheizzentrale nach Anspruch 1,
dadurch gekennzeichnet, daß
die Pumpe (4) des Heizkreislaufs für hohes Temperaturniveau (5) zwischen der Kesseltherme (1) und dem Mischpunkt (6) angeordnet ist.

3. Kompaktheizzentrale nach Anspruch 1,
dadurch gekennzeichnet, daß
die Pumpe (7) des Heizkreislaufs für niedriges Temperaturniveau (8) in dessen Rücklauf angeordnet ist.

4. Kompaktheizzentrale nach Anspruch 1,
dadurch gekennzeichnet, daß
die Pumpen (4,7) jeweils drehzahlregulierbar im Bereich 0 - 100 % sind, wobei die Drehzahlen im Verhältnis umgekehrt proportional gesteuert werden.

5. Kompaktheizzentrale nach Anspruch 1,
dadurch gekennzeichnet, daß
das Eingangssignal für die Steuerung der Drehzahlen der Pumpen (4,7) der gemessene Wärmebedarf ist.

6. Kompaktheizzentrale nach Anspruch 1,
dadurch gekennzeichnet, daß
sich am Mischpunkt (6) eingangsseitig Rückschlagklappen befinden, wobei die Rückschlagklappe (12) mit dem Heizkreislauf für hohes Temperaturniveau (5) und die Rückschlagklappe (13) mit dem Heizkreislauf für niedriges Temperaturniveau (8) verbunden ist.

7. Kompaktheizzentrale nach Anspruch 1,
dadurch gekennzeichnet, daß
am Verteilpunkt (15) zwischen dem Vorlauf des Heizkreislaufs für niedriges Temperaturniveau (8) und dem Heizkreislaufs für hohes Temperaturniveau (5) im Rücklauf des Heizkreislaufs für hohes Temperaturniveau (5) eine Drosseleinrichtung (18) angeordnet ist.

8. Kompaktheizzentrale nach Anspruch 1, dadurch gekennzeichnet, daß
das inneren Leitungsnetzes mit dem Verteilpunkt (15) und dem Mischpunkt (6), die Meß,- Steuer,-und Regeleinrichtungen mit den Rückschlagklappen (12) und (13), dem Motorregulierventil (3), dem Verteilventil (11), der Drosseleinrichtung (18), den Pumpen (4) und (7) der Heizkreisläufe und der Pumpe (14) der Solarkollektoranlage, der Zirkulationspumpe (16), den Sicherheitsarmaturengruppen für das Trinkwasser-, Gastechnik- und Heizungssystem (21) und (22), sowie die Anschlußleitungen zu den Heizkreisläufen (5) und (8) vor der Kesseltherme (1) bzw. dem Brauchwasserspeicher (2) in einem leicht zugängigen Teil der Verkleidung (17) angeordnet sind.

9. Kompaktheizzentrale nach Anspruch 1, dadurch gekennzeichnet, daß
das Ausdehnungsgefäß (20) für die Heizkreisläufe und das Sicherheitsgefäß für die Solarkollektoranlage unterhalb des Brauchwasserspeichers (2) in der Verkleidung (17) angeordnet sind.

10. Kompaktheizzentrale nach Anspruch 1, dadurch gekennzeichnet, daß
die Kompaktheizzentrale eine transportable Baugruppe bildet.
